# EUROPEAN PATENT APPLICATION

(11) **EP 1 726 506 A1**
(43) Date of publication of application: **29.11.2006**
(21) Application number: 06114461.4
(22) Date of filing: 24.05.2006
(51) Int. Cl.: B62B 5/04

(54) **Wheel Lock for Mobility Aid**

(30) Priority: 26.05.2005 US 684656 P
(71) Applicant: INVACARE CORPORATION, Elyria, OH 44036-2125 (US)
(72) Inventor: Cerreto, Matthew R., Sullivan, OH 44880 (US); Adams, Joseph W., Strongsville, OH 44136 (US)
(74) Representative: Ganguillet, Cyril

(57) **Abstract**

An apparatus for blocking rotation of a wheel (30) relative to a frame (12) of a mobility aid (10) includes a spur gear (32) rotatable with the wheel, and a sector gear (66) mounted on the frame adjacent the spur gear. The sector gear is movable into engagement with the spur gear to block rotation of the wheel. An actuator (42) is provided for actuating the sector gear.

## Description

### Related Application

This application claims the benefit of the filing date of US Provisional Application No. 60/684,656, filed May 26, 2005. This application incorporates by reference the subject matter of said Provisional Application.

### Technical Field

The invention relates to a wheel lock for a mobility aid, such as, for example, a wheelchair. The invention relates to an apparatus and method for blocking rotation of (locking) a wheel of a mobility aid, to prevent rolling movement of the mobility aid. There are many different types of mobility aids with which the invention can be used. For example, the invention can be used with a wheelchair, a transport chair, a patient lift, a rollator, a recliner, of a pelvic stabilizer. The invention is described for use with a manual mobility aid, but is also usable with a power (motorized) mobility aid.

### Brief Description of the Drawings

Fig. 1 is a perspective view showing a wheel lock in association with a mobility aid in the form of a wheelchair;

Fig. 2 is an exploded perspective view of the wheel lock of Fig 1;

Fig. 3 is a schematic, elevational view of the wheel lock of Fig. 1, shown in an unlocked condition;

Fig. 4 is a view similar to Fig. 3 showing the wheel lock in a locked condition;

Fig. 5 is a schematic elevational view of a wheel lock that is another embodiment of the invention.

### Description of Exemplary Embodiments

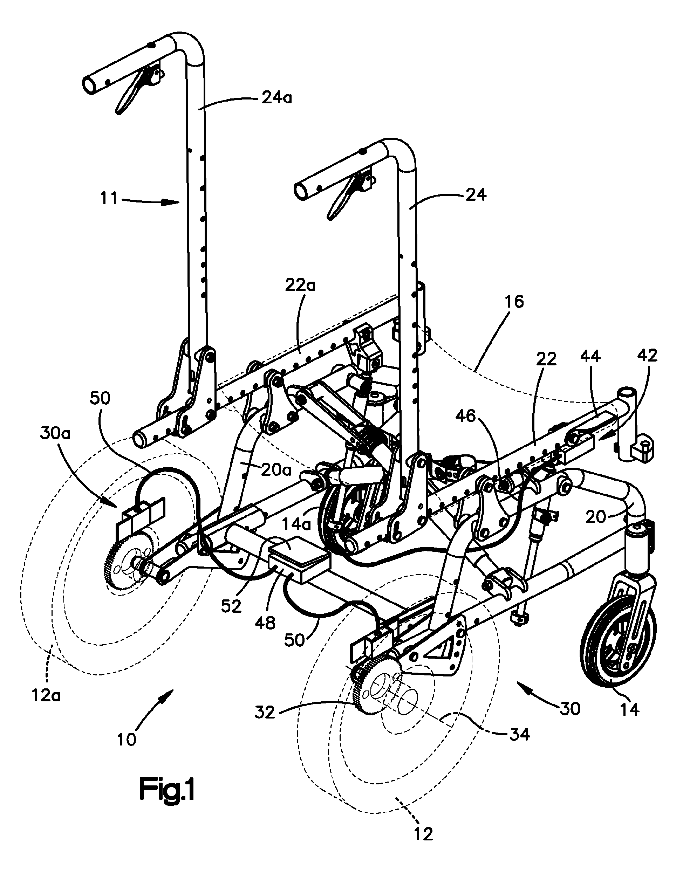

Figure 1 shows a mobility aid 10 which serves to exemplify the principles of this invention, the invention being broader in scope than the one embodiment. The mobility aid 10 is a wheelchair. The invention is applicable to other types of wheelchairs and to other types of mobility aids.

The exemplary wheelchair 10 includes a frame 12 made from a plurality of interconnected frame members. In the embodiment illustrated in Figure 1, the frame members of the mobility aid 10 include right and left side frames 20 and 20a, right and left seat rails 22 and 22a, and right and left back tubes 24 and 24a. The wheelchair 10 also includes right and left rear wheels 12 and 12a, right and left front casters 14 and 14a, and a seat 16. Other mobility aids with which the present invention is associated may have a different type of frame and thus may include different structural members.

The wheelchair 10 includes right and left wheel locks 30 and 30a for locking the right and left wheels 12 and 12a, respectively. The right and left wheel locks 30 and 30a may be mirror images of each other and so only the right wheel lock is described in detail herein.

The right wheel lock 30 (Figs. 1-4) includes a first locking member 32. The first locking member 32 is fixed for rotation with the right wheel 12 about a right wheel axis 34.
In the illustrated embodiment, the first locking member 32 is a spur gear; other types of gears, and other types of locking members, are possible. The spur gear 32 is fixed to the wheel hub 36 with one or more fasteners 38. The spur gear 32 has a circular outer periphery with a plurality of gear teeth 40. In the illustrated embodiment, the spur gear 32 has an outer diameter of about six inches and has seventy-two gear teeth 40. A different number of gear teeth may be provided.

The right wheel lock 30 may include either a hand-operated actuator or a foot-operated actuator or both. Both are shown, schematically, in Fig. 1. An exemplary hand-operated actuator, as shown schematically at 42 in Fig. 1, includes a manually engageable handle 44 connected in a force-transmitting relationship with one end portion of a cable 46. The cable 46 extends to a junction box 48 mounted on the frame 12 of the wheelchair 10. From the junction box 48 there extend two additional cables 50. An exemplary foot-operated actuator, shown schematically at 52 in Fig. 1, includes a manually engageable foot pedal connected in a force-transmitting relationship with the two cables 50. The foot pedal may alternatively be separate from the junction box for the hand actuator.

Other types of actuators are possible. For example, an electric actuator is possible. Further, in addition to the cables, other devices or structures for connecting the actuator with the wheel ends, are possible.

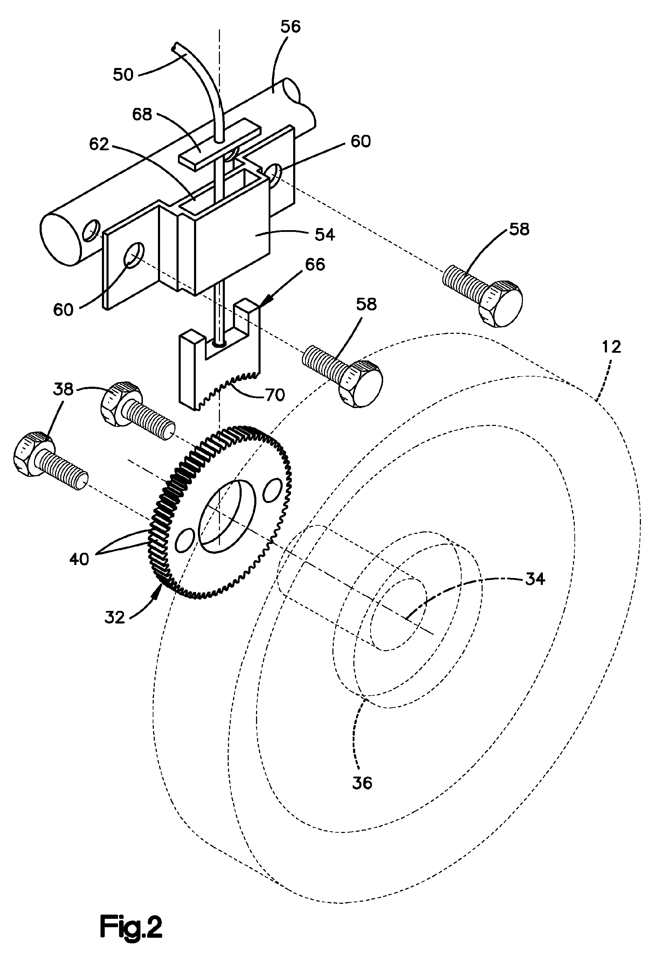

Each one of the cables 50 extending from the junction box 48, whether activated by a hand-operated actuator or a foot-operated actuator, extends to a housing 54 (Fig. 2). The housing 54 is fixed to a frame member 56 of the wheelchair 10, by fasteners 58 extending through fastener openings 60. The housing 54 is disposed radially outward of the spur gear 32, adjacent the wheel 12. The housing 54 may, as illustrated, be a metal casting.

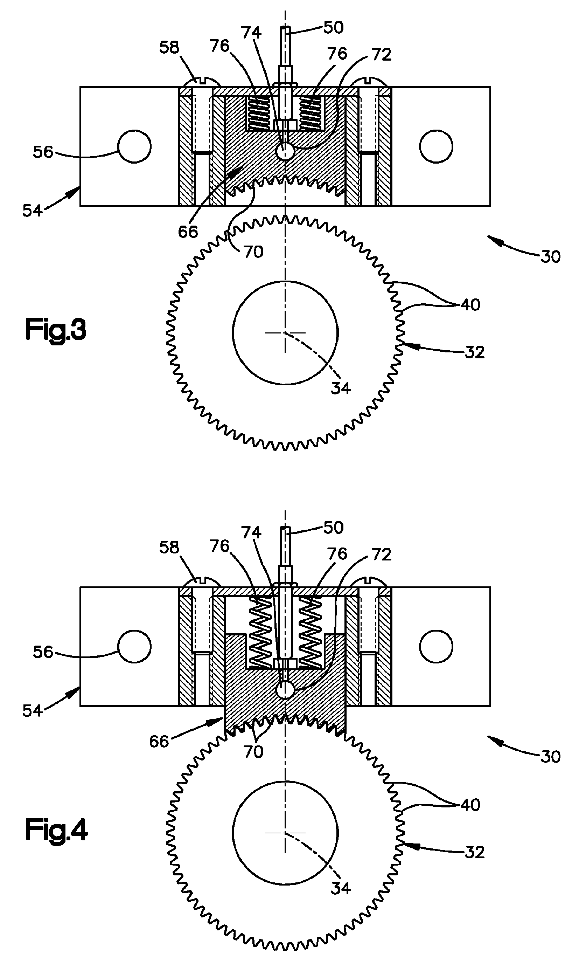

The housing 54 (Figs. 2 and 3) has a chamber 62. A second locking member 66 is received in the chamber 62. The second locking member 66 is adapted to lockingly engage the first locking member 32. The second locking member 66 may, alternatively, not be located in a chamber in the housing 54. The second locking member 66 may take different forms.

In the illustrated embodiment, the second locking member 66 (Fig. 2) is a gear segment in the form of a sector gear. The sector gear 66 has a plurality of gear teeth 70. The dimensions and pitch of the gear teeth 70 on the sector gear 66 are similar to the dimensions and pitch of the gear teeth 40 on the spur gear 32. Specifically, the dimensions and pitch of the gear teeth 70 on the sector gear 66 are the same as the dimensions and pitch of the gear teeth 40 on the spur gear 32. The spur gear that is illustrated has 72 teeth on its outer periphery. The sector gear 66 that is illustrated has about ten to fourteen gear teeth 70 over an arcuate extent of about thirty to forty five degrees. Other numbers and dimensions may be suitable.

The sector gear 66 is supported in the chamber 62 for sliding movement in the housing 54 relative to the spur gear 32, in a direction toward and away from the axis 34. An end plate 68 fixed to the housing 54 retains the sector gear 66 in the housing.

The sector gear 66 has a cable end opening 72 (Fig. 3) for receiving a cable end 74 of the cable 50. The wheel lock 30 (Fig. 3) includes means for biasing the second locking member 66 toward and/or into engagement with the first locking member 32. In the illustrated embodiment, such means is provided in the form of one or more springs 76. The springs 76 act between the end plate 68 and the sector gear 66. Other ways of biasing the second locking member 66 are possible. In addition, the invention is applicable to wheel locks in which the sector gear is biased out of engagement with the spur gear.

When the wheel lock 30 is in an unactuated condition as shown in Fig. 3, the handle (or foot pedal) (Fig. 1) is in a first position pulling on the cable 50. The force on the cable 50 is transmitted to the sector gear 66. The sector gear 66 is maintained in a position spaced apart from the spur gear 32, against the influence of the springs 76. The spur gear 32 is not blocked from rotation by the sector gear 66, and the wheel 12 is not locked.

In operation of the wheel lock 30, when the handle or foot pedal is actuated, the level of force transmitted through the cable 50 to the second locking member changes, and in response the second locking member is caused to pivot into engagement with the first locking member. Specifically, the wheel lock 30 is actuated by moving the handle 42 (or the foot pedal 52) to a second position. When the handle 42 (or the foot pedal 52) is moved to a second position, slack is introduced into the cable 50, allowing the springs 76 to transmit locking force to the sector gear 66. The sector gear 66 is moved from the position shown in Fig. 3 to the locking position shown in Fig. 4, by the force of the springs 76.

The sector gear 66 engages the spur gear 32. The teeth 70 on the sector gear 66 mesh with the teeth 40 on the spur gear 32. Because the housing 54 is fixed on the wheelchair frame 12, the engagement of the sector gear 66 with the spur gear 32 blocks rotation of the spur gear. Because the spur gear is fixed for movement with the wheel hub, this engagement thus locks the wheel 12, blocking rotation of the wheel.

Because the force from the handle 42 (or foot pedal 52) is transmitted to both wheel locks 30 and 30a, both the left wheel 12a and the right wheel 12 are locked at the same time.

The sector gear 66 engages the spur gear 32 with a plurality of teeth, not merely one tooth. As a result, the engagement between the sector gear 66 and the spur gear 32 can be more strong and sure than the engagement of, for example, one pin or tooth with a spur gear; or the engagement of one pin in a single hole in a rotating disc. Because the locking force is spread out over a relatively large surface area, wear on the parts 32 and 66 is minimized, and a strong connection is formed. In addition, a wheel lock of the present invention can require significantly less adjustment over time than a wheel lock that engages the tire, because such a wheel lock must be adjusted as the tire wears.

The teeth 40 on the spur gear 32 (and the interengaging teeth 70 on the sector gear 66) are radially oriented. Thus, each tooth 40, 70 extends in a slightly different orientation from its adjacent teeth. All the teeth 70 on the sector gear 66 thus "point" in different directions from each other; at most, only one or two point in the direction of sliding movement of the sector gear 66. As a result, the non-circumferential force components on the teeth 70, that would tend to act in an outward direction, do not "line up" in the direction of sliding movement; only a small portion of the sum of those forces is in that direction. This can tend to reduce the outward camming force on the sector gear 32 resulting from strong attempts to roll the chair when the wheel lock 10 is engaged.

The relatively fine tooth pitch that is possible with the meshing gears 32 and 66 can provide a relatively large number of positions at which the wheel lock can engage―as compared to the engagement of a single pin in one of a plurality of openings, for example. Thus, the wheel 12 is more apt to be locked immediately or almost immediately upon actuation of the locking handle (or foot pedal), without having to rotate the wheel by a significant amount. For example, a mobility aid with a 12" wheel travels about 38" per revolution. If the spur gear has 72 teeth, then rolling movement of the mobility aid is about one half inch per tooth. In addition, the fine resolution makes it extremely likely that actuation of the wheel lock 10 will result in immediate engagement. This can avoid providing a false sense of engagement.

The sector gear 66 is not cantilevered (supported in a cantilevered manner) but rather is supported along both sides in its sliding movement between its locked position and its unlocked position. Specifically, the sector gear 66 has a relatively long extent of sliding engagement with the housing. The sides of the sector gear 66 engage the housing 54 for a relatively long extent even when the sector gear 66 is in its locked position. As a result, in the event of extremes of force loadings, the sector gear 66 resists lateral movement. As a result, there is little or no side to side movement of the sector gear 66, which movement could lead to locking instability.

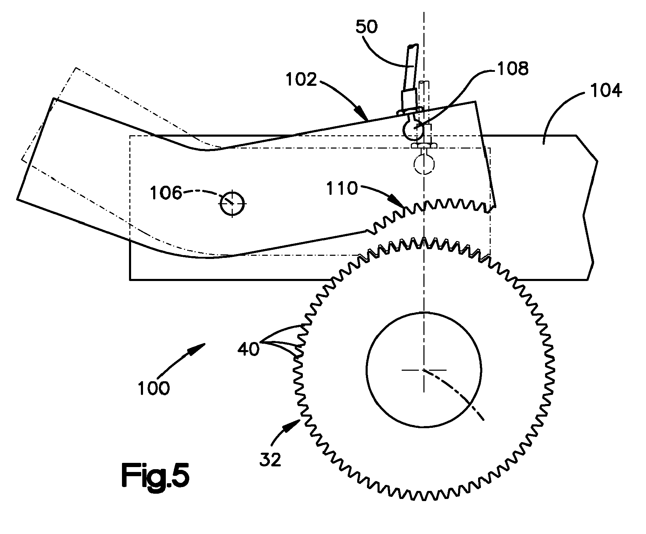

Fig. 5 illustrates schematically a wheel lock 100 that is a second embodiment of the invention. The wheel lock 100 includes a first locking member 32 that may be the same spur gear as in the first embodiment. In place of the radially moving second locking member 70, the second embodiment includes a pivoting second locking member 102. The second locking member 102 may be formed from metal with a generally V-shaped configuration as illustrated, or with another configuration or from a different material. The second locking member 102 is supported on the vehicle frame 104 for pivotal movement about a pivot axis 106. To one side of the pivot axis 106 the second locking member 102 includes a connection 108 for the cable 50. The second locking member 102 also has a set of gear teeth 110 that are presented toward the first locking member 32. (The cable could alternatively, be connected with the second locking member on the same side of the pivot axis 106 as the gear teeth 110.). The gear teeth 110 may be arranged in an arcuate configuration as shown. Biasing means (not shown) may also be provided for the second locking member 102.

In operation of the wheel lock 100, when the handle or foot pedal is actuated, the level of force transmitted through the cable 50 to the second locking member 102 changes, and in response the second locking member is caused to pivot into engagement with the first locking member 32. Specifically, the gear teeth 110 on the second locking member 102 engage the gear teeth 40 on the spur gear 32. This engagement blocks rotation of the spur gear 32, thereby locking the associated wheel. Return of the handle or foot pedal to its previous position results in the gear teeth 110 pivoting back out of engagement with the spur gear 32, thus releasing the wheel to rotate.

While the present invention has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. For example, the invention is applicable to wheel locks that lock only one wheel at a time; and to wheel locks that are applied using force from a hand, foot, or a mechanical or electrical device. Therefore, the invention, in its broader aspects, is not limited to the specific details, the representative apparatus, and illustrative examples shown and described. Accordingly, departures may be made from such details without departing from the spirit or scope of the applicant's general inventive concept.

## Claims

1. Apparatus for blocking rotation of a wheel relative to a frame of a mobility aid, comprising:
a spur gear rotatable with the wheel;
a sector gear mounted on the frame adjacent the spur gear;
the sector gear being movable into engagement with the spur gear to block rotation of the wheel; and
an actuator for actuating the sector gear.

2. Apparatus as set forth in claim 1 wherein the spur gear has a circular outer periphery with a plurality of gear teeth.

3. Apparatus as set forth in claim 1 wherein the sector gear has an arcuate periphery with a plurality of gear teeth.

4. Apparatus as set forth in claim 1 wherein the dimensions and pitch of the gear teeth on the sector gear are the same as or similar to the dimensions and pitch of the gear teeth on the spur gear.

5. Apparatus as set forth in claim 1 wherein the sector gear moves in a direction parallel to the plane of the spur gear.

6. Apparatus as set forth in claim 1 wherein the sector gear slides relative to the frame and to the spur gear.

7. Apparatus as set forth in claim 1 wherein the actuator includes a hand lever or a foot pedal.

8. Apparatus as set forth in claim 1 wherein the sector gear is biased toward its locking position, and its position is controlled by a cable between the sector gear and the actuator, and when the actuator is moved to its locked position, slack is introduced into the cable, allowing the spring to transmit locking force to the sector gear to move the sector gear into its locking position.

9. Apparatus as set forth in claim 1 wherein the sector gear is not cantilevered.

10. Apparatus as set forth in claim 1 wherein the sector gear has first and second opposite side surfaces that slidingly engage first and second opposite side surfaces on the housing during movement of the sector gear into engagement with the spur gear.

11. Apparatus as set forth in claim 1 wherein the sector gear and the spur gear have teeth with engagement surfaces that face in many different directions along the arc of engagement between the sector gear and the spur gear.

12. Apparatus as set forth in claim 1 wherein the number of teeth on the sector gear is selected to provide rolling movement of the mobility aid of about one half inch per tooth.

13. Apparatus for blocking rotation of a wheel relative to a frame of a mobility aid, comprising:
a first locking member rotatable with the wheel, the first locking member having a plurality of teeth on a circular outer periphery;
a second locking member mounted on the frame adjacent the first locking member, the second locking member having a plurality of teeth;
the plurality of teeth on the second locking member being movable into engagement with the plurality of teeth on the first locking member to block rotation of the wheel; and
an actuator for actuating the second locking member.

14. Apparatus for blocking rotation of a wheel relative to a frame of a mobility aid, comprising:
a spur gear rotatable with the wheel;
a housing mounted on the frame adjacent the spur gear; and
a sector gear supported on the housing and movable into engagement with the spur gear to block rotation of the wheel;
the sector gear having first and second opposite side surfaces that slidingly engage first and second opposite side surfaces of the housing during movement of the sector gear into engagement with the spur gear.

15. Apparatus for blocking rotation of a wheel relative to a frame of a mobility aid, comprising:
a spur gear rotatable with the wheel, the spur gear having a circular outer periphery with a plurality of gear teeth.
a sector gear mounted on the frame adjacent the spur gear, the sector gear having an arcuate periphery with a plurality of gear teeth, the dimensions and pitch of the gear teeth on the sector gear being similar to the dimensions and pitch of the gear teeth on the spur gear;
the sector gear being slidable in a direction parallel to the plane of the spur gear between an unlocked position out of engagement with the spur gear and a locking position in engagement with the spur gear to block rotation of the wheel
at least one biasing member biasing the sector gear toward the locking position;
an actuator for actuating the sector gear, including a cable connected with the sector gear, the actuator having a locked position and an unlocked position;
wherein slack is introduced into the cable when the actuator is moved to the locked position, allowing the biasing member to transmit locking force to the sector gear to move the sector gear into its locking position.
